# EUROPEAN PATENT APPLICATION

(11) **EP 4 644 096 A1**
(43) Date of publication of application: **05.11.2025**
(21) Application number: 25169006.1
(22) Date of filing: 08.04.2025
(51) Int. Cl.: B29C 65/10, B65B 51/20, B65B 51/26, F16K 5/04, F16K 5/12, B29K 23/00, B29K 705/02, B29K 711/12, B29L 9/00

(54) **SYSTEM AND METHOD FOR HEATING A LONGITUDINAL EDGE OF A PACKAGING WEB, PACKAGING MACHINE AND COMPUTER PROGRAM PRODUCT THEREOF**

(30) Priority: 03.05.2024 IT 202400009949
(71) Applicant: Tetra Laval Holdings & Finance S.A., 1009 Pully (CH)
(72) Inventor: DONATI, Andrea, 41123 Modena (IT); MEO, Emanuele Antonino, 41123 Modena (IT); PIRANI, Marco, 41123 Modena (IT); MONZANI, Federico, 41123 Modena (IT)
(74) Representative: Tetra Pak Patent Attorneys

(57) **Abstract**

System (**100**) for heating a longitudinal edge of a packaging web advancing along an advancement path; the system (**100**) comprising an actuating apparatus (**103**) configured to adjust an air flow to be fed for heating a longitudinal edge of the packaging web. The actuating apparatus (**103**) comprises: a valve (**104**) configured to adjust the air flow to be fed for heating the longitudinal edge of the packaging web; and an actuator (**105**) coupled to the valve and configured to adjust a position of the valve (**104**) to control the air flow based on at least one between a parameter (**Δf**, **T**, **p**) associated to the air flow and a parameter associated to the movement of the packaging web along the advancement path.

## Description

### TECHNICAL FIELD OF THE INVENTION

The invention relates generally to packaging technology. More particularly, the present invention relates to systems and methods for heating a longitudinal edge of a packaging web, in particular for longitudinally sealing opposite edges of a packaging web to form a tube or a package, as well as packaging machines and computer program products thereof.

### STATE OF THE ART

As is known, many liquid or pourable food products, such as fruit juice, UHT (ultra-high-temperature treated) milk, wine, tomato sauce, *etc.,* are sold in packages made of sterilized packaging material.

A typical example is the parallelepiped-shaped package for liquid or pourable food products known as Tetra Brik Aseptic^{®}, which is made by sealing and folding a laminated packaging material.

The packaging material has a multilayer sheet structure substantially comprising one or more stiffening and strengthening base layers typically made of a fibrous material, *e.g.* paper or cardboard, or mineral-filled polypropylene material, covered on both sides with one or more heat-seal plastic material layers, *e.g*. polyethylene film. In the case of aseptic packages for long-storage products, such as UHT milk, the packaging material also comprises a gas- and light-barrier material layer, *e.g*. aluminum foil or ethyl vinyl alcohol (EVOH) film, which is superimposed on a heat-seal plastic material layer, and is in turn covered with another heat-seal plastic material layer forming the inner face of the package eventually contacting food product.

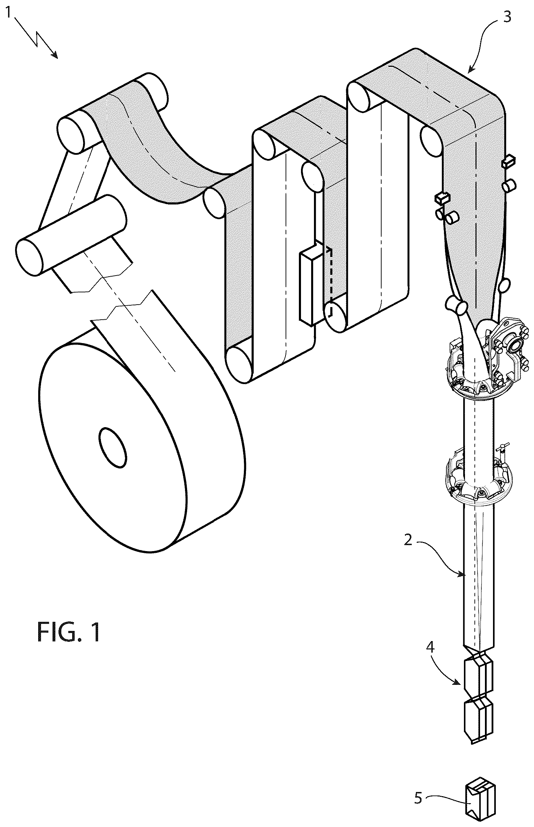

Packages of this type are normally produced on fully automatic packaging machines, also known as packaging or filling machines, of the type shown in Figure 1 as a nonlimiting example and referenced as a whole with reference numeral **1,** where a continuous vertical tube **2** is formed from a packaging web **3,** which is sterilized by applying, *e.g*. a chemical sterilizing agent such as a hydrogen peroxide solution, or physical sterilization, such as by means of an electron beam. Once sterilization is completed, any residue, in particular left by the chemical sterilizing agent, is removed, *e.g*. evaporated by heating, from the surfaces of the packaging material. The packaging web **3** is maintained in a closed, sterile environment, in particular within an isolation chamber and is folded and then heat-sealed longitudinally to form the vertical tube **2,** *e.g*. by exposing the web to a heated air flow.

The vertical tube **2** is filled with a sterilized or sterile-processed pourable food product by means of a filling pipe extending inside the vertical tube **2.** The vertical tube **2** is advanced along a vertical advancing direction to a forming station, where it is gripped along equally spaced transversal sections by a jaw system including two or more pairs of jaws acting cyclically and successively on the vertical tube **2** to form a continuous sequence of packs, here pillow packs, **4** connected to one another by transverse sealing bands. The packs **4** are then separated from one another by cutting the sealing bands and are conveyed to a folding station, where they are folded mechanically into finished, *e.g.* substantially parallelepiped-shaped, packages or food packages **5.**

### OBJECT AND SUMMARY OF THE INVENTION

The Applicant has noted that, even though the known solutions work satisfyingly well, a need is felt to find alternative solutions to reduce an exposure of the packaging material to the heating element during variations in speed of the advancing web, *e.g.* due to transients or events.

In particular, the Applicant has noted that a control of the temperature of the air flow to be fed for heat-sealing may be afflicted by overall thermal inertia. This has been found to be particularly disadvantageous when a more responsive dynamic (*e.g.*, during start-and-stop or when the flow rate of the air flow changes rapidly, *e.g*. during transients) is needed.

Thus, a desire is felt in the sector to provide for and optimize systems and methods for efficiently controlling the hot air flow used for heating the packaging web, namely for heating the longitudinal edge of a packaging web, in further detail for longitudinally sealing the sealing strip or sealing two opposite longitudinal edges of the packaging web to allow formation of a tube or packages therefrom.

The aim of the present invention is hence to develop systems and methods heating a longitudinal edge of a packaging web, in particular for longitudinally sealing opposite edges of a packaging web to form a tube or a package, thereby solving at least part of the abovementioned inconveniences.

This aim is achieved by the present invention, that relates to a system and a method for heating a longitudinal edge of a packaging web, in particular for longitudinally sealing opposite edges of a packaging web to form a tube or a package, as well as packaging machines and computer program products thereof, as claimed in the appended claims.

### BRIEF DESCRIPTION OF THE DRAWINGS

Figure 1 shows a perspective view, with parts removed for clarity, of a packaging machine operable to produce sealed packages containing pourable food products from a tube of packaging material.
Figure 2 schematically shows a perspective view of a system for heating a longitudinal edge of a packaging web according to the present invention with parts removed for clarity.
Figure 3 shows a top view of the system of Figure 2.
Figure 4 shows a perspective view of a valve of a system for heating a longitudinal edge of a packaging web according to the present invention.
Figures 5a and 5b show lateral views taken along a section line VA-VA in Figure 5c of the valve of Figure 4 in different operational positions.
Figure 5c shows a top view of the valve of Figures 4 and 5a-5b.
Figure 6 shows a perspective view of the valve body of the valve of Figures 4 and 5a-5c.
Figure 7 shows a schematic top view of a heating element for heating a longitudinal edge of a packaging web connected to the system of Figure 2.

### DETAILED DESCRIPTION OF THE INVENTION

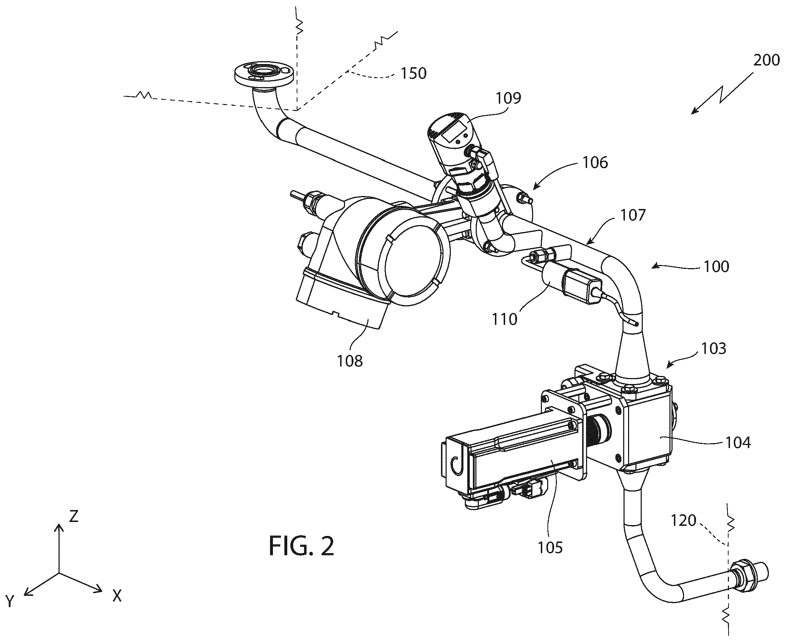

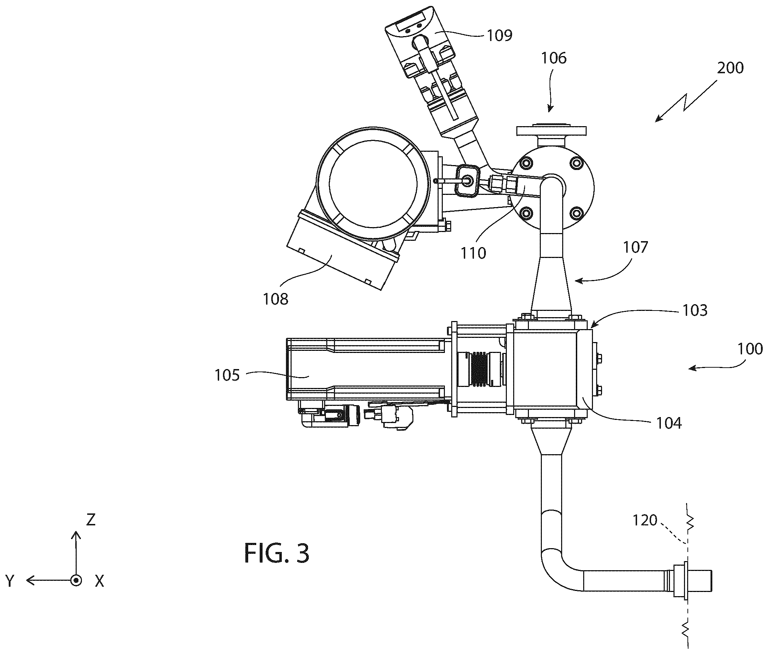

Figures 2 and 3 show a portion of a system **100** for heating a longitudinal edge of a packaging web or material advancing along an advancement path (not shown), in particular for forming a tube of packaging material during the operation of a packaging machine **200,** with parts removed for clarity and for aiding the comprehension of the present invention. It is noted that, according to another aspect of the present invention, not disclosed in detail hereinafter, the system **100** is also configured to heat the longitudinal edge of the packaging web for forming packages therefrom. According to an aspect of the present invention, the system 100 is part of the packaging machine 200. Furthermore, according to another aspect of the present invention, the packaging machine **200** comprises:
- a web folding unit (not shown) configured to fold the packaging web into a tube;
- a longitudinal sealing unit (not shown); and
- a transversal sealing and cutting unit (not shown) configured to seal and cut the tube along successive transversal cross-sections thereof in order to obtain a sequence of packs.

The system **100** comprises an actuating apparatus **103** configured to adjust an air flow to be fed for heating the longitudinal edge of the packaging web; in particular, the actuating apparatus **103** comprises:
- a valve **104** configured to adjust the air flow to be fed for heating the packaging web; and
- an actuator **105** coupled to the valve **104** and configured to adjust a position of the valve **104** to control the air flow based on at least one between a parameter, in particular a physical parameter, associated to the air flow and a parameter, in particular a physical parameter, associated to the movement of the packaging web along the advancement path.

According to an aspect of the present invention, the position of the valve **104** is adjusted as a function of an operation of the transversal sealing and cutting unit of the packaging machine **200,** preferably a speed thereof.

Advantageously, the adjustment of the air flow improves flexibility of the packaging machine **200,** in particular in situations such as a change in speed of the advancement of the packaging material or changes in the status of the heated air flow, thereby taking into account several changes in the conduction of the heating procedure and, thus, minimizing possible anomalies to the packaging material.

Advantageously, thanks to the instant solution, the packaging material can be heated more uniformly.

According to an aspect of the present invention, the actuator 105 is a servo motor; in particular, according to an aspect of the present invention, the actuating apparatus **103,** in particular the actuator **105,** is in communication with one or more electronic processing resources (not shown) and configured to drive the valve **104** according to the required dynamics of the air flow, *i.e.* to adjust the operational position of the valve **104** to control the air flow to be provided for the heat-sealing.

Advantageously, the servo motor allows for precise control of angular or linear position, velocity, and acceleration. In particular, the servo motor can readily adapt to transient and high-speed changes in the packaging machine. The use of a servo motor in addition to the possibility of controlling the air flow further helps in minimizing possible anomalies to the packaging material.

According to a further aspect of the present invention, the parameter associated to the movement of the packaging web along the advancement path comprises a speed of the advancing packaging web; thus, the actuator **105** is configured to adjust position of the valve **104** based on the speed or velocity of the advancing packaging web, in particular a variation thereof. For example, in case of a machine event, the speed of the advancing packaging material may vary, *e.g*. it may decrease for a certain time interval.

According to a further aspect of the present invention, the system **100** also comprises a sensory apparatus **106** coupled to the actuating apparatus **103,** in particular the actuator **105,** either upstream and/or downstream to the valve **104** and, in general, the actuating apparatus **103,** and configured to generate an output indicative of at least one between a pressure **p** and a temperature **T** of the air flow to be fed and transmit such outputs to the actuating system **103** for controlling the valve **104** and, thus, the air to be flown to the aseptic chamber **120.**

The packaging machine **200** comprises a fluidic line **107** fluidically connecting a portion of the packaging machine **200,** *e.g*. a reservoir or a portion connected to the external environment, hereinafter referred to as air feeding portion **150,** from which air is introduced in the same fluidic line **107** and an aseptic chamber **120** wherein the heating of the packaging web is performed. Thus, the fluidic line **107** defines a fluidic path in which air flows from the abovementioned air feeding portion **150** and the aseptic chamber **120.**

The sensory apparatus **106** is arranged along the fluidic line **107,** in particular to be able to measure one or more quantities relating to the air flow in the feeding path **107.**

In further detail, the sensory apparatus **106** comprises a flowmeter **108,** here arranged upstream the valve **104** with respect to the fluidic path defined by the fluidic line **107,** configured to output a flow rate **Δf** of the air passing through the fluidic path. Furthermore, the sensory apparatus **106** comprises a pressure sensor **109,** here arranged upstream the valve **104** and optionally downstream the flowmeter **108** with respect to the fluidic path, configured to output a pressure **p** of the air passing through the fluidic path. In addition, the sensory apparatus **106** comprises a temperature sensor **110,** here arranged upstream the valve **104** and optionally downstream the pressure sensor **109** with respect to the fluidic path, configured to output a temperature **T** of the air passing through the fluidic path.

Therefore, as better disclosed in the following paragraphs, the actuator **105** is configured to adjust the position of the valve **104** based on at least one of the abovementioned flow rate **Δf,** pressure **p** and temperature **T** of the air flowing in the fluidic path.

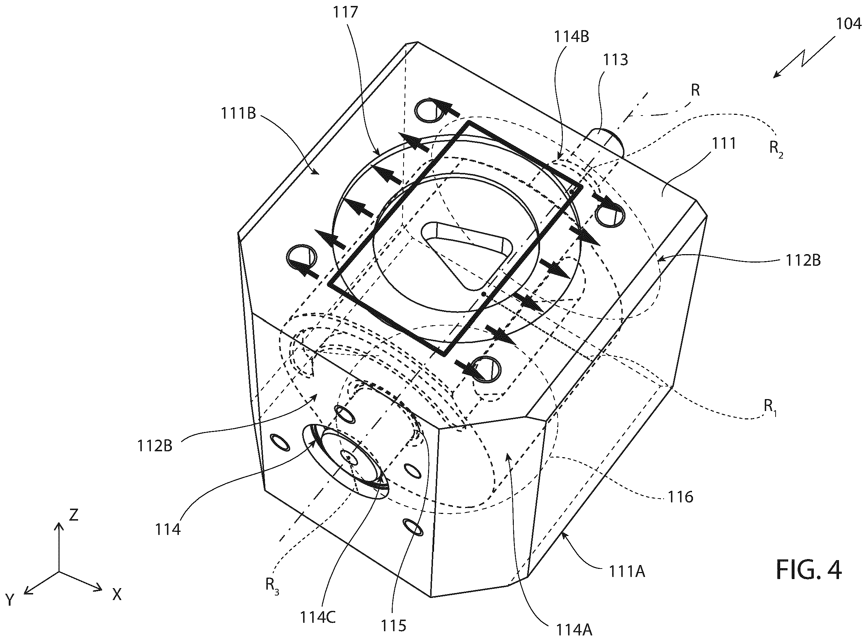

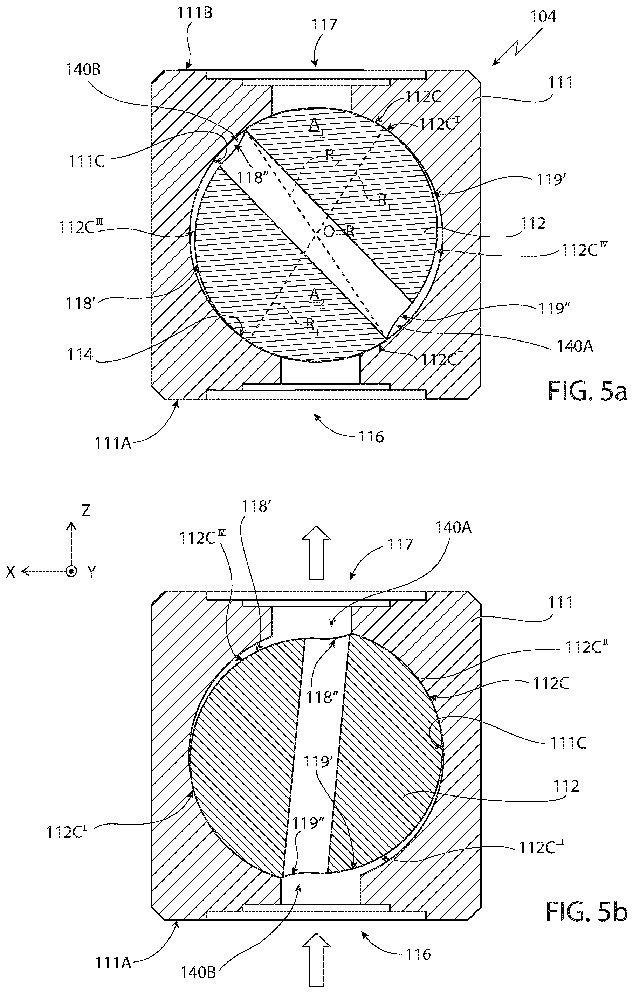

Figures 4-6 show a preferred embodiment of the valve **104** of the actuation apparatus **103** of the system **100** shown in Figure 2. In particular, the valve **104** comprises:
- a valve housing **111;** and
- a valve body **112** movably, in particular rotatably, arranged in the valve housing **111** and configured to move between a first operational position, wherein the air flow is substantially blocked or restricted (but non-null), in particular from entering the aseptic chamber **120,** *i.e.* the valve **104** is closed (Figure 5a), and a second operational position, wherein the air flow is substantially fully allowed to enter the aseptic chamber **120,** *i.e.* the valve **104** is opened (Figure 5b), to control the air to be fed for heating the packaging web.

In particular, when the valve **104** is in the first operational position, as anticipated above, the air flow is non-null, meaning that a small amount of air still flows into the aseptic chamber **120;** such small amount of air flow is not sufficient to heat or overheat the longitudinal edge of the packaging web but allows a better control of the heating process, since a complete lack of air flow (*i.e.* a fully closed valve **104**) would lead to pressure peaks in the production line, which would undermine the production of tubes and/or packages.

The valve body **112** here has a substantially cylindrical shape.

The valve **104** also comprises a driving shaft **113** connected to the valve body **112** and configured to rotate the valve body **112** with respect to the valve housing **111** around a rotation axis **R,** here parallel to a Y axis of a Cartesian reference system XYZ; in particular, the valve body **112** has a pass-through cavity **115** extending along the longitudinal extension of the valve body **112** (*i.e.* along the length of the same valve body **112,** along the Y axis) and configured to house the driving shaft **113.** According to an aspect of the present invention, the driving shaft **113** extends beyond the valve body **112;** in particular, the driving shaft **113** comprises a first portion **113A** and a second portion **113B** respectively extending beyond a first surface **112A** and a second surface 112B (here parallel to a XZ plane of the Cartesian reference system XYZ) of the valve body **112.** In other words, according to the present embodiment, the longitudinal extension of the driving shaft **113** is greater than the longitudinal extension of the valve body **112.**

According to an aspect of the present invention, the first portion **113A** of the driving shaft **113** is configured to be connected to the actuator **105** to allow any movement of the valve body **112** between the first and the second operational position, *i.e.* to allow the valve **104** to close and open according to the movement imparted by the actuator **105.**

It is noted that the valve housing **111** and the valve body **112** are arranged with respect to each other to have clearance and, thus, allowing movement of the valve body **112** with respect to the valve housing **111** around the rotation axis **R;** in other words, the valve body **112** only partially engages an inner surface **111C** of the valve housing **111.** In further detail, the valve housing **111** has a substantially cylindrical seat, also referred to as cavity for simplicity in the following, **114** configured to house the valve body **112** and at least in part the driving shaft **113.** In particular, the cavity **114** comprises:
- a first portion **114A** configured to house the valve body **112;** and
- a second and a third portion **114B, 114C** configured to house the first and second portions **113A, 113B** of the driving shaft **113** respectively.

The portions **114A-114C** are in fluidical communication with each other; furthermore, given the substantially cylindrical shape of the cavity **114,** the portions **114A-114C** are also substantially cylindrical shaped and, in further detail, are concentric one another on the same XZ plane, namely along the Y axis, thereby having a common center O and respective radii **R₁-R₃.** According to an aspect of the present invention, the radii **R₂** and **R₃** of the second and the third portions **114B, 114C** are equal; furthermore, the radius **R₁** of the first portion **114A** is higher than the radii **R₂**, **R₃**, *i.e.* the diameter of the first potion **114A** is higher than the diameter of the second and third portions **114B, 114C.**

The valve housing **111** further has a first opening **116** and a second opening **117** both extending in the valve housing **111** up until the cavity **114** from respective first and second surfaces **111A, 111B,** both parallel to a XY plane of the Cartesian reference system XYZ and opposite to each other, of the valve housing **111;** having this arrangement, the cavity **114** is fluidically connected to the external environment through the openings **116, 117,** thereby allowing flow of air to the aseptic chamber **120** in particular through the fluidic line **107** from the first opening **116** to the second opening **117** when the valve **104** is opened, *i.e.* when the valve body **112** is in the second operational position, as also better described below. On the other hand, when the valve **104** is closed, only a small amount of air flows to the aseptic chamber **120** along the fluidic line **107,** as the fluidic path from the first opening **116** to the second opening **117** is obstructed by the valve body **112.** In further detail, the openings **116, 117** are fluidically connected to the fluidic line **107;** in particular, the first opening **116** is fluidically connected to the portion of the fluidic line **107** connected to the air feeding portion **150** and the second opening **117** is fluidically connected to the portion of the fluidic line **107** connected to the aseptic chamber **120.**

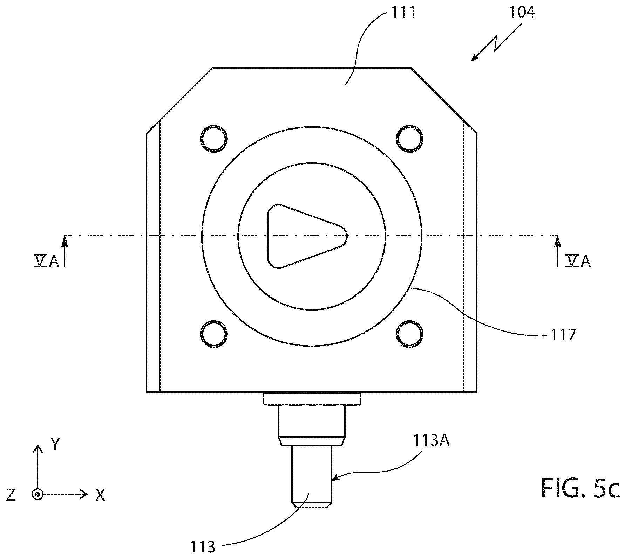

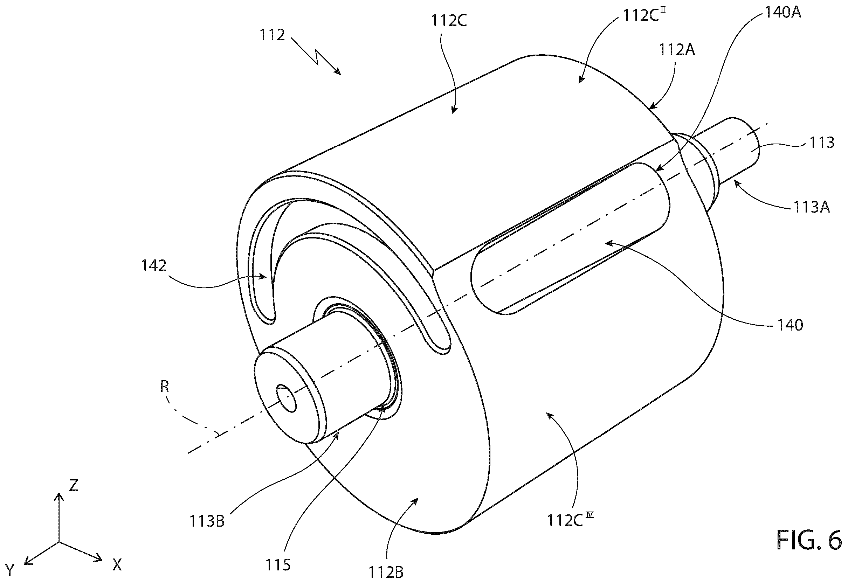

Referring in detail to Figures 5 and 6, the valve body **112** is laterally defined by a lateral surface **112C** which only partially engages the inner surface **111C** of the valve housing 111. In particular, referring to Figures 5a and 5b, the lateral surface **112C** comprises:
- a first surface portion **112C^{I}** and a second surface portion **112C^{II}**, opposite to each other with respect to the center **O** and configured to engage at least in part the inner surface **111C** of the valve housing **111,** *i.e*. the valve body **112** has a radius equal to the radius **R₁** in said first and second surface portions **112C^{I}, 112C^{II};** and
- a third surface portion **112C^{III}** and a fourth surface portion **112C^{IV},** opposite to each other with respect to the center **O** and configured to progressively distance from the inner surface **111C** of the valve housing **111,** thereby having a variable radius which is smaller than the radius **R₁**.

In particular, the surface portions **112C^{I}-112C^{IV}** are in continuity with each other. Furthermore, according to an aspect of the present invention, the extension of the first surface portion **112C^{I}** is the same as the extension of the second surface portion **112C^{II};** and the extension of the third surface portion **112C^{III}** is the same as the extension of the fourth surface portion **112C^{IV}.**

In further detail, the third surface portion **112C^{III}** comprises a first, convex region **118'** and a second, concave region **118"** in continuity with each other. In particular, the first region **118'** has a progressively increasing angular distance from the inner surface **111C** along a first rotational direction, here clockwise, with respect to the rotation axis **R;** the second region **118"** has a progressively decreasing angular distance from the inner surface **111C** along the first rotational direction. Similarly, the fourth surface portion **112C^{IV}** comprises a first, convex region **119'** and a second, concave region **119"** in continuity with each other. In particular, the first region **119'** has a progressively increasing angular distance from the inner surface **111C** along the first rotational direction; the second region **119"** has a progressively decreasing angular distance from the inner surface **111C** along the first rotational direction.

According to an aspect of the present invention, the first and second surface portions **112C^{I}, 112C^{II}** and the radius **R₁** of the valve body **112** define respective angular sectors **A₁**, **A₂** centered in center **O** and subtending respective angles **α**, **β**; according to an aspect of the present invention, the angles **α**, **β** are equal, *i.e.* the angular sectors **A₁**, **A₂** are equal to each other. In particular, the angles **α**, **β** are for example between 60° and 70°, preferably 63°.

The valve body **112** also comprises an inner channel **140** extending transversally with respect to the longitudinal extension of the same valve body **112,** *i.e.* the inner channel **140** extends along a direction transverse to the rotation axis **R.** In particular, the inner channel **140** is in communication with the external environment, in particular the cavity **114,** through openings **140A, 140B** respectively formed in third and fourth surface portions **112C^{III}, 112C^{IV},** thereby being opposite to each other. It is noted that, when the valve **104** is opened, air flows from the first opening **116** to the second opening **117** by crossing the inner channel **140,** as the openings **140A, 140B** engage the openings **116, 117** respectively; on the other hand, when the valve **104** is closed, air is substantially blocked or restricted from flowing (but non-null, meaning that a negligible amount of air is still allowed to be flown) from the first opening **116** to the second opening **117,** as the openings **140A, 140B** engage the inner surface **111C.**

The valve body **112** also comprises a further cavity **142** formed on the second surface **112B** of the valve body **112;** in particular, the further cavity **142** extends into the valve body **112** along a direction parallel to the rotation axis **R** and has a convex shape, in particular following the profile of the first and second surface portions **112C^{I}, 112C^{II}.**

In the following, it is exemplarily disclosed the operation of the valve **104** when driven by the actuator **105.**

When the valve **104** is in the closed position (Figure 5a), at least parts of the first and second surface portions **112C^{I}, 112C^{II}** engage the openings **116, 117** and the third and fourth surface portions **112C^{III}, 112C^{IV}** engage the inner surface **111C** of the valve housing **111,** *i.e.* the openings **140A, 140B** engage and thus face the inner surface **111C,** thereby minimizing any flow of air from the first opening **116** to the second opening **117.**

When the valve **104** is driven to move from the closed position to the opened position, *i.e.* from the position shown in Figure 5a to the position shown in Figure 5b, by the driving shaft **113** gradually rotating around the rotation axis **R** in a second rotational direction, here counter-clockwise, as a consequence of the actuator **105** moving said driving shaft **113,** the valve body **112** is driven by the driving shaft **113** to rotate around the rotation axis **R** in the second rotational direction so that the parts of the first and second surface portions **112C^{I}, 112C^{II}** previously engaging the openings **116, 117** move to gradually engage only with the inner surface **111C** and the third and fourth surface portions **112C^{III}, 112C^{IV}** move to gradually engage the openings **116, 117,** thereby allowing the openings **140A, 140B** of the inner channel **140** to gradually establish a fluidic communication with the openings **116, 117.** In this way, the air coming from the first opening **116** gradually enters the inner channel **140,** thereby enabling control of the flow of the same towards the second opening **117.**

Once the valve **104** is completely opened (Figure 5b), the openings **140A, 140B** fully engage respectively with the openings **116, 117** thereby allowing the air to flow directly towards the aseptic chamber **120.**

Afterwards, when the valve 104 has to be closed once again, namely it has to move from the opened position shown in Figure 5b to the closed position shown in Figure 5a, the valve body **112** is driven by the driving shaft **113** to rotate around the rotation axis **R** in the first rotational direction so that the parts of the first and second surface portions **112C^{I}, 112C^{II}** move to gradually engage once again with the openings **116, 117** and the third and fourth surface portions **112C^{III}, 112C^{IV}** move to gradually engage once again with the inner surface **111C,** thereby allowing the openings **140A, 140B** of the inner channel **140** to disengage with the openings **116, 117,** thereby interrupting the fluidic communication between the openings **116, 117.** In this way, the air coming from the first opening **116** is gradually blocked from entering the inner channel **140,** thereby gradually reducing the amount of air being introduced in the aseptic chamber **120.** Once the valve **104** is in the closed position, the valve body **112** is once again in the position shown in Figure 5a.

An exemplarily operation of the system **100** according to the present invention is now disclosed hereinafter.

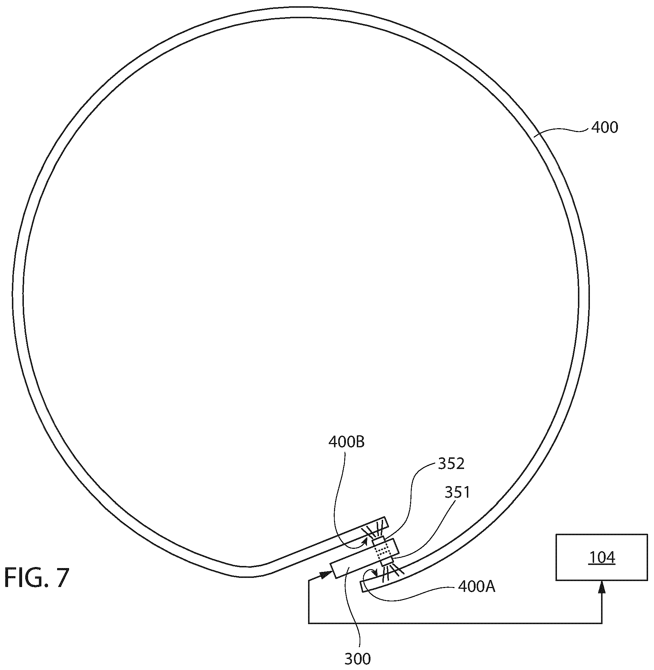

Initially, the valve **104** is in the closed position, as shown in Figure 5a; once the packaging machine **200** is activated, the packaging web to be longitudinally sealed with the sealing strip is positioned in the aseptic chamber **120.** According to a further aspect of the present invention, the longitudinal edge of the packaging web is heated by means of a heating element **300,** which is fluidically connected to the valve **104;** in this case, the valve **104** is temporarily positioned in the opened position and the air is flowed from the first opening **116** to the second opening **117** along the fluidic line **107** so that the air flows into the aseptic chamber **120,** in particular towards the heating element **300** so as to provide heated air towards the packaging web, referred to in Figure 7 with the reference number **400** and which, according to an aspect of the present invention, is to be formed into a tube. As anticipated in the previous paragraphs, the amount of air flowing into the aseptic chamber **120** towards the packaging web is controlled by means of the actuator **105,** which is configured to drive the driving shaft **113** according to set values of air flow **Δf**, temperature **T** and/or pressure **p,** which are for example predetermined or pre-set by a user before starting the heat-sealing process of the sealing strip. According to a further aspect of the present invention, the actuator **105** is configured to control the air flow according to real-time measured values of air flow **Δf**, temperature **T** and/or pressure **p,** *i.e.* the amount of air to be flown to the aseptic chamber **120** is controlled based on the outputs generated by the sensory apparatus **106.** According to a further aspect of the present invention, alternative or in combination with the previously described ones, the actuator **105** is configured to control the air flow according to the speed of the packaging web.

In particular, air is flown from the air feeding portion **150** along the fluidic line **107** to direction it to the aseptic chamber **120** while passing through the system **100;** in detail, upon flowing into the fluidic line **107,** the fluxmeter **108,** the pressure sensor **109** and/or the temperature sensor **110** are configured to respectively generate outputs relative to the measured air flow **Δf**, pressure **p** and/or temperature **T** of the air flowing in the fluidic line **107** and transmit such determined values to the actuator **105,** in particular so that the one or more electronic processing resources process such outputs to generate corresponding commands for controlling the operation of the valve **104.** Accordingly, the actuator **105** drives the driving shaft **113** to allow rotation of the valve body **112** around the rotation axis **R,** in particular along the second rotational direction, so that the valve **104** moves between the closed position and the opened position according to the modalities described with reference to Figures 5a-5b; thus, as the valve **104** moves from the closed position to the opened position, air gradually starts flowing into the aseptic chamber **120,** *i.e.* in a controlled manner to better control the air flux in each step of the heat-sealing process.

As anticipated in the previous paragraphs, the amount of air fed to the aseptic chamber **120** may be controlled either based on at least one between the air flow **Δf**, the pressure **p** and the temperature **T** measured by the sensory apparatus **106** and/or the movement of the packaging web along the advancement path. In particular, in the former case, since the air flow **Δf** is also indirectly influenced by changes in the values of the pressure **p** and/or the temperature **T,** based on the outputs generated by the sensory apparatus **106,** the actuator **105** is configured to drive the driving shaft **113** accordingly, for example so as to rotate the valve body **112** to reduce or enhance the air to be flown to the aseptic chamber **120,** *i.e.* to adjust the position of the valve body **112** so as to allow introduction of more or less air into the aseptic chamber **120.**

In other words, the system **100** is configured to control the air to be flown in the aseptic chamber either based on one or more outputs generated by the sensory apparatus **106,** in particular temperature **T** and pressure **p,** and/or based on the determined speed of the advancing packaging web in the aseptic chamber **120** and moving therein.

Once the heat-sealing process is concluded, *i.e.* the edges of the packaging web have been heat-sealed with the sealing strip, the actuator **105** is configured to drive the driving shaft **113** to move the valve body **112** so that the valve **104** moves from the opened position to the closed position; such operation may be induced automatically by the system **100** itself, for example after a predetermined time interval inputted beforehand by the user.

According to a further aspect of the present invention, the outputs generated by the sensory apparatus **106** may be used as a feedback for the actuator **105;** in particular, such outputs may be stored in a memory (not shown) of the system **100** itself, so that, in following heat-sealing processes, the actuator **105** operates also based on the stored outputs to properly control the air flowing into the aseptic chamber **120.** This is particularly advantageous for automatically controlling the air flow to be fed to the aseptic chamber **120** even in certain regimes, for example during a transient (*e.g.*, at the start of the heat-sealing process) or after a stop-restart situation, *i.e.* wherein the heat-sealing process is stopped and restarted after a certain time interval. For example, controlling during transients may reduce any possibility of overheating the packaging web. According to a further aspect of the present invention, such feedback may be used for example for stopping the packaging machine **200** in case an anomaly in the values of the generated outputs is determined to be present, *e.g.* one or more values of the outputs exceeds a certain threshold value for avoiding any kind of defect.

It is furthermore noted that, according to an aspect of the present invention, the valve **104** is configured to be driven into the first operational position, *i.e*. closed, when the packaging web does not advance; furthermore, according to a further aspect of the present invention, the valve **104** is driven to move from first operational position when the packaging web starts advancing. In this way, the risk of having the packaging web overheated is reduced and control over the heating process is improved.

As partly anticipated above, Figure 7 shows the heating element **300** comprising:
- a number (one shown in Figure 7) of first nozzles **351** configured to direct the air flow, in particular the heated air, towards the longitudinal edge, referred to in Figure 7 with the reference number **400A,** of the packaging web **400;**
- a number (one shown in Figure 7) of second nozzles **352** configured to direct the air flow, in particular the heated air, towards a further longitudinal edge, referred to in Figure 7 with the reference number **400B,** opposite to the longitudinal edge **400A,** of the packaging web **400.**

In other words, the heating element **300** is interposed between the longitudinal edges **400A, 400B** to heat both of them in use.

It is noted that the term "nozzles" hereinafter refer to assemblies comprising at least one of the following elements:
- through holes (referred to in Figure 7 with the reference numbers **353, 354**) from which air is fed from the heating element **300** to the packaging web **400;** and
- air feeding devices in fluidic communication with the holes and configured to direct the heated air from the heating element **300** to the packaging web **400** to heat the latter as anticipated in the previous paragraphs.

The advantages that the present invention allows to achieve may be readily appreciated by the skilled person.

In particular, the present system **100** allows for a control of the heat-sealing process of a (longitudinal) sealing strip for the formation of packages, namely in situations where the packaging web advancing speed varies. In other words, the present invention is particularly advantageous when it is needed to control rapid changes in the air flow (e.g. transients).

Furthermore, the present invention may be advantageously used for automatically controlling the air flow, as well as, in general, control the heat-sealing process to avoid any kind of anomaly in the formation of the final packages.

In conclusion, from the description above follows that, although various embodiments of the invention have been described and shown, the invention is not restricted thereto, but may also be embodied in other ways within the scope of the subject-matter defined in the following claims.

According to an aspect, as previously described, the valve **104** is configured, to control the air to be fed for heating the longitudinal edge of the packaging web, to move between a first operational position, wherein the air flow is negligible (e.g. for heating purposes), and a second operational position, wherein the air is substantially fully allowed to flow. In particular, in the first position a small amount of air is allowed to flow however is negligible in that it is not enough to heat the packaging material. In particular, when the valve **104** is in the first position, the air flow is non-null, in particular is non-null and negligible. That is, when the valve **104** is in the first position, the air flow may fail to heat the longitudinal edge of the packaging web.

## Claims

1. System (**100**) for heating a longitudinal edge of a packaging web advancing along an advancement path; the system (**100**) comprising an actuating apparatus (**103**) configured to adjust an air flow to be fed for heating a longitudinal edge of the packaging web,
the actuating apparatus (**103**) comprises:
- a valve (**104**) configured to adjust the air flow to be fed for heating the longitudinal edge of the packaging web; and
- an actuator (**105**) coupled to the valve and configured to adjust a position of the valve (**104**) to control the air flow based on at least one between a parameter (**Δf**, **T**, **p**) associated to the air flow and a parameter associated to the movement of the packaging web along the advancement path.

2. The system (**100**) according to claim **1,** wherein the actuator (**105**) is a servo motor.

3. The system (**100**) according to claim **1** or **2,** wherein the parameter associated to the movement of the packaging web along the advancement path comprises the speed of the advancing packaging web.

4. The system (**100**) according to any one of the preceding claims, wherein the parameter (**Δf**, **T, p**) associated to the air flow comprises one or more of a pressure (**p**), a temperature (**T**) and a flow rate (**Δf**) of the air flow to be fed.

5. The system (**100**) according to claim **4**, comprising a sensory apparatus (**106**) configured to generate an output indicative of the parameter (**Δf**, **T, p**) associated to the air flow and comprising at least one of:
- a pressure sensor (**109**) configured to output a pressure (**p**) of the air;
- a temperature sensor (**110**) configured to output a temperature (**T**) of the air;
- a flowmeter (**108**) configured to output a flow rate (**Δf**) of the air.

6. The system (**100**) according to any one of the preceding claims and comprising a heating element (**300**) having:
- a number of first nozzles (**351**) configured to direct the air flow towards the longitudinal edge (**400A**) of the packaging web (**400**); and
- a number of second nozzles (**352**) configured to direct the air flow towards a further longitudinal edge (**400B**) of the packaging web (**400**), the further longitudinal edge (**400B**) being opposite the longitudinal edge (**400A**).

7. The system (**100**) according to any one of the preceding claims, wherein the valve (**104**) is configured, to control the air to be fed for heating the longitudinal edge of the packaging web, to move between a first operational position, wherein the air flow is negligible, and a second operational position, wherein the air is substantially fully allowed to flow.

8. The system (**100**) according to claim **7,** wherein, when the valve (**104**) is in the first position, the air flow is non-null.

9. The system (**100**) according to any one of claims **7** or **8**, wherein the valve (**104**) is in the first operational position when the packaging web does not advance and/or wherein the valve (**104**) moves away from the first operational position when the packaging web starts advancing.

10. The system (**100**) according to any one of the preceding claims, wherein the valve (**104**) comprises:
- a valve housing (**111**);
- a valve body (**112**) movably arranged in the valve housing (**111**) and configured to move between the first operational position and the second operational position; and
- a driving shaft (**113**) connected to the valve body (**112**) and configured to rotate the valve body (**112**) with respect to the valve housing (**111**) around a rotation axis (**R**),
wherein the valve housing (**111**) has:
- a cavity (**114**) configured to house the valve body (**112**) and at least in part the driving shaft (**113**); and
- a first opening (**116**) and a second opening (**117**) extending in the valve housing (**111**) up until the cavity (**114**) from respective first and second surfaces (**111A, 111B**) of the valve housing (**111**),
and wherein the cavity (**114**) is fluidically connected to an external environment through the openings (**116, 117**) thereby allowing flow of air when the valve body (**112**) is in the second operational position.

11. Method for heating a longitudinal edge of a packaging web advancing along an advancement path; the method comprising adjusting an air flow to be fed for heating the longitudinal edge of the packaging web, the method further comprising adjusting a position of a valve (**104**) configured to adjust the air flow to be fed for heating the longitudinal edge of the packaging web to control the air flow based on at least one between a parameter (**Δf**, **T, p**) associated to the air flow and a parameter associated to the movement of the packaging web along the advancement path.

12. The method according to claim **11,** wherein the parameter associated to the movement of the packaging web along the advancement path comprises a speed of the advancing packaging web and wherein the method further comprises adjusting the position of the valve (**104**) based on the speed of the advancing packaging web.

13. The method according to claim **11** or **12,** wherein the parameter (**Δf**, **T, p**) comprises one or more of a pressure (**p**), a temperature (**T**) and/or a flow rate (**Δf**) of the air flow to be fed detected by a sensory apparatus (**106**).

14. Packaging machine (**200**) for forming packages from a packaging web, each packaging being filled with a pourable product; wherein the packaging machine (**200**) comprises a system (**100**) for heating a longitudinal edge of the packaging web advancing along an advancement path according to any one of claims **1-10** to adjust an air flow to be fed for heating the longitudinal edge of the packaging web.

15. Packaging machine (**200**) according to claim **14,** comprising:
- a web folding unit configured to fold the packaging web into a tube;
- a longitudinal sealing unit,
- a transversal sealing and cutting unit configured to seal and cut the tube along successive transversal cross-sections thereof in order to obtain a sequence of packs;
wherein the position of the valve (**104**) is adjusted as a function of an operation of the transversal sealing and cutting unit, preferably a speed thereof.

16. Computer program product loadable and executable by a system (**100**) for heating a packaging web advancing along an advancement path according to any one of claims **1-10** and configured to make, when executed, the system (**100**) to operate as according to a method for heating a packaging web advancing along an advancement path according to any one of claims **11-13.**
